# EUROPÄISCHE PATENTANMELDUNG

(11) **EP 1 234 608 A1**
(43) Veröffentlichungstag der Anmeldung: **28.08.2002**
(21) Anmeldenummer: 02003858.4
(22) Anmeldetag: 20.02.2002
(51) Int. Cl.: B01D 37/02, B01J 20/26, B01D 39/02, B01D 39/16, C08F 26/10

(54) **Teilchenförmige Polymerisate als Filterhilfsmittel**

(30) Priorität: 21.02.2001 DE 10108386
(71) Anmelder: BASF AKTIENGESELLSCHAFT, 67056 Ludwigshafen (DE)
(72) Erfinder: Gomez, Marcos, 69116 Heidelberg (DE); Rock, Tilman, 74889 Sinsheim (DE); Meffert, Helmut, 67065 Ludwigshafen (DE); Sanner, Axel, 67227 Frankenthal (DE)
(74) Vertreter: Kinzebach, Werner, Dr.

(57) **Zusammenfassung**

Die Erfindung betrifft die Verwendung teilchenförmiger, in Wasser unlöslicher und wenig quellbarer Polymerisate aus ethylenisch ungesättigten Monomeren, die wenigstens 20 Gew.-%, bezogen auf das Gesamtgewicht der Monomere, wenigstens einer α,β-monoethylenisch ungesättigten Monocarbonsäure mit 3 bis 6 C-Atomen einpolymerisiert umfassen, als Filterhilfsmittel für die Filtration wässriger Flüssigkeiten. Die Erfindung betrifft außerdem wasserunlösliche, nur wenig quellbare Polymerisate (Popcorn-Polymerisate), die α,β-monoethylenisch ungesättigte Carbonsäuren und Styrol oder Styrolderivate einpolymerisiert enthalten, sowie ein Verfahren zu ihrer Herstellung.

## Beschreibung

Die vorliegende Erfindung betrifft die Verwendung teilchenförmiger, in Wasser unlöslicher und wenig quellbarer Polymerisate auf Basis ethylenisch ungesättigter Monomere als Filterhilfsmittel für die Filtration wässriger Flüssigkeiten sowie neue teilchenförmige, in Wasser unlösliche und wenig quellbare Copolymerisate.

Die Trennung von fest-flüssigen Stoffgemischen durch Filtration ist ein wichtiger Verfahrensschritt in vielen industriellen Produktionsprozessen. Insbesondere bei der Filtration wässriger Flüssigkeiten bedient man sich häufig sogenannter Filterhilfsmittel. Bei den Filterhilfsmitteln handelt es sich um teilchenförmige, beispielsweise granulierte, pulverförmige oder faserförmige Substanzen, die je nach Art und Menge des in der zu filtrierenden Flüssigkeit enthaltenen Feststoffs den Aufbau eines Filterkuchens ermöglichen oder diesen auflockern sollen.

Die Wirkung der Filterhilfsmittel beruht auf der Ausbildung von Kapillaren in dem Filterkuchen, die einerseits klein genug sind, um Feststoffe zurückzuhalten, andererseits zahlreich genug sind, um den Ablauf der flüssigen Phase zu erleichtern. Zu diesem Zweck kann man das Filterhilfsmittel der zu filtrierenden Suspension (Trübe) zugeben und/oder vor der Filtration als Hilfsschicht bzw. Vorschicht auf der Filterfläche aufbringen. Bei der sogenannten Anschwemmfiltration wird beispielsweise vor dem Filtrationsbeginn auf einer Stützfläche eine Filterhilfsmittel-Vorschicht angeschwemmt. Das Filterhilfsmittel wird dann der Trübe, vorzugsweise kontinuierlich, zudosiert. Bei der Filtration bildet sich so ein lockerer Filterkuchen aus Filterhilfsmittel aus, welcher die Feststoffe der Trübe zurückhält, so dass das flüssige Dispergiermedium als klares Filtrat ablaufen kann (zu den Begriffen Filterhilfsmittel und Filtration siehe auch "Roempp Chemielexikon", 9. Auflage, Georg Thieme Verlag Stuttgart, S. 1357 ff., sowie C. Alt in Ullmann's Encyclopedia of Industrial Chemistry, 5th ed. on CD-ROM, "Filtration" insbesondere Kapitel 4 "Deep bed filtration und Kapitel 11 "Filter aids").

Es versteht sich von selber, dass die Filterhilfsmittel chemisch inert und in der zu filtrierenden Trübe unlöslich sein sollten. Zudem sollten sie sich unter Druckeinfluss nicht verformen, damit die Poren im Filterkuchen nicht kollabieren. Außerdem ist es wünschenswert, wenn die Filterhilfsmittel regenerierbar sind.

Die gebräuchlichsten Filterhilfsmittel umfassen neben organischen Substanzen wie Cellulose, Holzkohle und Holzpulver, anorganische Materialien, insbesondere silikatischer Natur, wie Kieselgur, Perlite, Diatomeen und Bentonite. Diese Materialien haben jedoch den Nachteil, dass sie nicht regenerierbar sind und daher entsorgt werden müssen.

Insbesondere in der Getränkeindustrie besteht ein hoher Bedarf an Filterhilfsmitteln für wässrige Flüssigkeiten, da Fruchtsaft- und Gärungsgetränke wie Bier häufig einer Filtration unterworfen werden. Als Filterhilfsmittel wird in der Getränkeindustrie häufig Kieselgur verwendet. Bei der Herstellung von Bier werden beispielsweise 150 bis 200 g Filterhilfsmittel, insbesondere Kieselgur, je hl Bier benötigt. Da die Filterwirkung dieser Filterhilfsmittel nach einer gewissen Zeit nachlässt, müssen sie entfernt werden, und, im Falle der nicht-regenerierbaren Filterhilfsmittel, deponiert werden, was naturgemäß mit einem hohen Kostenaufwand verbunden ist. Zudem wird eine krebserregende Wirkung der in der Getränkeindustrie verwendeten Kieselgur derzeit diskutiert.

Es hat daher nicht an Versuchen gefehlt, synthetische Filterhilfsmittel bereitzustellen. In der US 4,344,846 wird beispielsweise die Verwendung von expandiertem Polystyrol in der Anschwemmfiltration beschrieben.

Die WO 96/35497 und die EP 483099 beschreiben Filterhilfsmittel für die Anschwemmfiltration auf Basis kugelförmiger, inkompressibler Polymere, beispielsweise Polyvinylpyrrolidon oder Polyamid-11, die einen Filterkuchen mit einer Porosität im Bereich von 0,3 bis 0,5 bilden.

Aus der EP-A 177812 sind hochvernetzte, wenig quellbare, pulverförmige Popcorn-Polymerisate auf Basis von N-Vinylpyrrolidon bekannt, die als Filterhilfsmittel verwendet werden können.

Die DE-A 19920944 beschreibt unlösliche, nur wenig quellbare Popcorn-Polymerisate auf Basis von Styrol und N-Vinyllactamen. Die Verwendung dieser Popcorn-Polymerisate als Filterhilfsmittel wird vorgeschlagen.

Die synthetischen Filterhilfsmittel auf Basis von Polymeren weisen eine verbesserte Regenerierbarkeit auf. Ihre Filtrierwirkung lässt jedoch teilweise zu wünschen übrig. Ein Teil der synthetischen Filtrierhilfsmittel ist wiederum weniger für die Anschwemmfiltration wässriger Flüssigkeiten geeignet, da sie in Wasser nicht oder nur schlecht sedimentieren.

Der vorliegenden Erfindung liegt die Aufgabe zu Grunde, Filterhilfsmittel für die Filtration wässriger Flüssigkeiten bereitzustellen, die eine gute Filtrationswirkung aufweisen und die für die Anschwemmfiltration geeignet sind. Außerdem ist eine gute Regenerierbarkeit der Filterhilfsmittel wünschenswert. Zudem sollte das Filterhilfsmittel preiswert und möglichst lösemittelfrei herstellbar sein.

Diese Aufgabe wird überraschenderweise gelöst, durch teilchenförmige, in Wasser unlösliche und wenig quellbarer Polymerisate auf Basis ethylenisch ungesättigter Monomere, die wenigstens 20 Gew.-%, bezogen auf das Gesamtgewicht der Monomere, wenigstens einer α,β-monoethylenisch ungesättigten Mono- und/oder Dicarbonsäure mit 3 bis 6 C-Atomen einpolymerisiert enthalten. Demnach betrifft die vorliegende Erfindung die Verwendung derartiger Polymerisate als Filterhilfsmittel für die Filtration wässriger Flüssigkeiten.

Die erfindungsgemäss zur Anwendung kommenden Polymerisate sind trotz ihrer Hydrophilie, bedingt durch die einpolymerisierten Säuremonomere a), in Wasser nahezu oder vollständig unlöslich und werden von Wasser nicht oder nur in geringem Ausmass gequollen. Der maximale Quellungsgrad Qₘₐₓ (H₂O) entspricht dabei dem maximalen Gewichtsanteil Wasser in Prozent, der von einem Gewichtsteil Polymerisat bei Raumtemperatur maximal absorbiert wird. In der Regel wird Qₘₐₓ (H₂O) einen Wert von 400 % nicht überschreiten. Vorzugsweise liegt Qₘₐₓ (H₂O) unterhalb 100 % und insbesondere unter 80 %.

Die geringe Wasserlöslichkeit und -quellbarkeit der erfindungsgemäss zur Anwendung kommenden Polymerisate wird durch einen hohen Vernetzungsgrad bzw. eine hohe Vernetzungsdichte der Polymerketten untereinander erreicht.

Der Anteil der ethylenisch ungesättigten Carbonsäuren, im folgenden auch Monomere a), in den erfindungsgemässen Polymerisaten beträgt in der Regel 20 bis 100 Gew.-%, bzw. bei Anwesenheit von Comonomeren bis 99,9 Gew.-%, vorzugsweise 25 bis 95 Gew.-% insbesondere 30 bis 80 Gew.-% und besonders bevorzugt 40 bis 70 Gew.-%, jeweils bezogen auf das Gesamtgewicht der das Polymerisat konstituierenden Monomere. Beispiele für ethylenisch ungesättigte Carbonsäuren mit 3 bis 6 C-Atomen sind Acrylsäure, Methacrylsäure, Crotonsäure als Monocarbonsäuren sowie Maleinsäure, Fumarsäure und Itaconsäure als Dicarbonsäuren. Bevorzugt enthalten die erfindungsgemäss zur Anwendung kommenden Polymerisate Acrylsäure und/oder Methacrylsäure einpolymerisiert, wobei Polymerisate, die Acrylsäure als Monomer a) einpolymerisiert enthalten, besonders bevorzugt sind.

Als Comonomere kommen grundsätzlich alle mit den ethylenisch ungesättigten Carbonsäuren copolymerisierbaren Monomere in Betracht. Hierzu zählen insbesondere Derivate der ethylenisch ungesättigten Carbonsäuren, z.B. ihre Alkylester, ihre Amide und ihre Hydroxyalkylester, vinylaromatische Monomere wie Styrol und Derivate des Styrols, N-Vinylamide, und N-Vinyl-Stickstoffheterocyclen, und vernetzende Monomere, d.h. Verbindung mit wenigstens 2 nichtkonjugierten, ethylenisch ungesättigten Doppelbindungen.

Der Anteil der Comonomere an den das Polymerisat konstituierenden Monomeren liegt, sofern vorgesehen, in der Regel im Bereich von 0,1 bis 80 Gew.-%, vorzugsweise 5 bis 75 Gew.-%, insbesondere im Bereich von 20 bis 70 Gew.-% und besonders bevorzugt im Bereich von 30 bis 60 Gew.-%.

Beispiele für Derivate ethylenisch ungesättigter Carbonsäuren sind: Amide wie Acrylamid, Methacrylamid, Alkylester mit vorzugsweise 1 bis 18 C-Atomen im Alkylteil, z.B. Methylacrylat, Ethylacrylat, n-Propylacrylat, Isopropylacrylat, n-Butylacrylat, 2-Butylacrylat, iso-Butylacrylat, tert.-Butylacrylat, n-Hexylacrylat, 2-Ethylhexylacrylat, Laurylacrylat und Stearylacrylat, Methylmethacrylat, Ethylmethacrylat, n-Propylmethacrylat, Isopropylmethacrylat, n-Butylmethacrylat, 2-Butylmethacrylat, iso-Butylmethacrylat, tert.-Butylmethacrylat, n-Hexylmethacrylat, 2-Ethylhexylmethacrylat, Laurylmethacrylat und Stearylmethacrylat; Hydroxyalkylester mit vorzugsweise 2 bis 4 C-Atomen im Hydroxyalkylteil, z.B. Hydroxyethylacrylat, 2- und 3-Hydroxypropylacrylat, 2 und 4-Hydroxybutylacrylat, Hydroxyethylmethacrylat, 2- und 3-Hydroxypropylmethacrylat, 2 und 4-Hydroxybutylmethacrylat.

Beispiele für N-Vinylamide, und N-Vinyl-Stickstoffheterocyclen sind: N-Vinyllacrame wie N-Vinylpyrrolidon, N-Vinylpiperidon, N-Vinylcaprolactam, Vinyl-substituierte Stickstoffheteroaromaten wie N-Vinylimidazol, N-Vinyl-2-methylimidazol, N-Vinyl-4-methylimidazol sowie N-Vinylamide aliphatischer Carbonsäure wie N-Vinylformamid und N-Vinylacetamid.

Beispiele für geeignete Styrolderivate sind: Alkylstyrole wie Vinyltoluol, tert.-Butylstyrol, Sulfongruppen-haltige Styrole, wie Styrol-3-sulfonsäure und Natrium-styrol-3-sulfonat sowie Aminogruppen-haltige Styrole, z.B. Styrole die in der 3-Position folgende Substituenten tragen: -CH₂N(CH₃)₂, -CH₂NHCH₃, -CH₂NH₂, -[CH₂N(CH₃)₃]⁺Cl⁻, -[CH₂N(CH₃)₂CH₂CH₂OH]⁺Cl⁻. Die o.g. Styrolderivate sind u.a. als Monomere zur Herstellung von Ionenaustauscherharzen bekannt. Styrol und Mischungen von Styrol mit Styrolderivaten sind als Comonomere bevorzugt.

Beispiele für vernetzende Monomere sind: Alkylenbisacrylamide wie Methylenbisacrylamid und N,N'-Acryloylethylendiamin, N,N'-Divinylharnstoffe wie N,N'-Divinylethylenharnstoff, N,N'-Divinylpropylenharnstoff, weiterhin Ethyliden-bis-3-(N-vinylpyrrolidon), N,N'-Divinyldiimidazolyl(2,2')butan und 1,1'-Bis-(3,3'-vinylbenzimidazolid-2-on)1,4-butan, Alkylenglykoldi(meth)acrylate wie Ethylenglykoldiacrylat, Ethylenglykoldimethacrylat, Tetraethylenglykolacrylat, Tetraethylenglykoldimethacrylat, Diethylenglykolacrylat, Diethylenglykolmethacrylat, aromatische Divinylverbindungen wie Divinylbenzol und Divinyltoluol sowie Vinylacrylat, Allylacrylat, Allylmethacrylat, Divinyldioxan und Pentaerythrittriallylether. Bevorzugte Vernetzer sind Alkylenglykoldi(meth)acrylate, N,N'-Divinylharnstoffe und N,N'-Divinylaromaten, insbesondere Ethylenglykoldiacrylat, Ethylenglykoldimethacrylat, N,N'-Divinylbenzol, N,N'-Divinylethylenharnstoff (= N,N'-Divinylimidazolidin-2-on).

Der Anteil vernetzender Monomere beträgt häufig 0,1 bis 10 Gew.-%, vorzugsweise 0,2 bis 8 Gew.-% und insbesondere 0,5 bis 5 Gew.-%, bezogen auf das Gesamtgewicht der das Polymerisat konstituierenden Monomere.

Erfindungsgemäss bevorzugte Polymerisate enthalten
a) 20 bis 98,9 Gew.-%, insbesondere 25 bis 89,8 Gew.-%, besonders bevorzugt 30 bis 79,5 Gew.-% und ganz besonders bevorzugt 39,5 bis 70 Gew.-% mindestens einer α,β-monoethylenisch ungesättigten Monocarbonsäure mit 3 bis 6 C-Atomen, insbesondere Acrylsäure und/oder Methacrylsäure und besonders bevorzugt Acrylsäure,
b) 1 bis 79,9 Gew.-%, insbesondere 10 bis 74,8 Gew.-%, besonders bevorzugt 20 bis 69,5 Gew.-% und ganz besonders bevorzugt 29,5 bis 60 Gew.-% Styrol und/oder mindestens eines einfach ungesättigten Styrolderivates, vorzugsweise Styrol oder eine Mischung von Styrol mit wenigstens einem Styrol-Derivat und besonders bevorzugt Styrol,
c) 0,1 bis 10 Gew.-% insbesondere 0,2 bis 8 Gew.-% und besonders bevorzugt 0,5 bis 5 Gew.-% mindestens eines Monomers c) mit wenigstens 2 nichtkonjugierten, ethylenisch ungesättigten Doppelbindungen und gegebenenfalls
d) 0 bis 40 Gew.-%, vorzugsweise 0 bis 20 Gew.-% und insbesondere 0 bis 10 Gew.-% eines oder mehrerer von den Monomeren a) bis c) verschiedenen Monomers d), vorzugsweise eines N-vinyllactams
einpolymerisiert, wobei sich die Gew.-% Angaben der Einzelkomponenten a) bis d) zu 100 % addieren. Derartige Polymerisate sind neu und ebenfalls Gegenstand der vorliegenden Erfindung.

In erfindungsgemäss besonders bevorzugten Ausführungsformen enthält das Polymerisat:
a) 20 bis 89,8 Gew.-%, insbesondere 30 bis 79,5 Gew.-% und besonders bevorzugt 39,5 bis 70 Gew.-% Acrylsäure,
b) 10 bis 74,8 Gew.-%, insbesondere 20 bis 69,5 Gew.-% und besonders bevorzugt 29,5 bis 60 Gew.-% Styrol oder einer Mischung von Styrol und mindestens einem einfach ungesättigten Styrolderivat,
c) 0,2 bis 8 Gew.-%, insbesondere 0,5 bis 5 Gew.-% mindestens eines Monomers c), ausgewählt unter Alkylenglykoldi(meth)acrylaten, N,N'-Divinylharnstoffen und N,N'-Divinylaromaten, und gegebenenfalls
d) 0 bis 10 Gew.-%, insbesondere 0 bis 5 Gew.-% eines oder mehrerer N-Vinyllactame, insbesondere N-Vinylpyrrolidon,
einpolymerisiert, wobei sich die Gew.-% Angaben der Einzelkomponenten a) bis d) zu 100 % addieren.

Die Herstellung der erfindungsgemäss zur Anwendung kommenden, in Wasser unlöslichen und wenig quellbaren Polymerisate kann in Anlehnung an bekannte Verfahren zur Herstellung hochvernetzter Polymerisate erfolgen.

Die hohe Vernetzungsdichte dieser Polymerisate kann einerseits dadurch erreicht werden, dass man bei der Herstellung der Polymerisate eine Monomermischung einsetzt, die grössere Mengen an vernetzend wirkenden Monomeren, beispielsweise zwei- oder mehrfach ethylenisch ungesättigte Monomere, enthält. Eine hohe Vernetzungsdichte kann auch dadurch erreicht werden, dass man die Polymerisation unter Reaktionsbedingungen durchführt, die zur Ausbildung von zusätzlichen Polymerisationszentren auf der noch wachsenden Polymerkette führen und damit eine Verzweigung und Vernetzung der Polymerketten untereinander bewirken.

Bevorzugt erfolgt die Herstellung der erfindungsgemässen Polymerisate durch Polymerisation der Monomere a), gegebenenfalls b), c) und d) in Abwesenheit von Sauerstoff und Polymerisationsinitiatoren. Abwesenheit von Sauerstoff bedeutet, dass die Sauerstoffkonzentration im Reaktionsmedium durch Inertisierungsmassnahmen möglichst gering gehalten wird. Geringe Sauerstoffspuren können in der Regel toleriert werden. Abwesenheit von Polymerisatinsinitiatoren bedeutet, dass die Konzentration an Polymerisationsinitiatoren deutlich unterhalb der Initiatorkonzentration liegt, die üblicherweise zur Initiierung einer radikalischen Lösungs- oder Substanz-Polymerisationsreaktion erforderlich ist. Üblicherweise führt man die Polymerisation in Abwesenheit von extern zugesetzten Initiatoren durch. Geringe Mengen an Initiatoren können jedoch toleriert werden. Sie betragen vorzugsweise weniger als 0,1 Gew.-% und insbesondere weniger als 0,05 Gew.-% bezogen auf die Gesamtmenge der zu polymerisierenden Monomere. Unter Polymerisationsinitiatoren versteht der Fachmann Verbindungen, die bei Einwirkung von Wärme oder energiereicher Strahlung unter Bildung von Radikalen zerfallen und so eine radikalische Polymerisation auslösen. Beispiele für Polymerisationsinitiatoren sind Azoverbindungen z.B. AIBN und vergleichbare Verbindungen, organische und anorganische Peroxide und Hydroperoxide, Peroxosäuren und deren Salze und übliche Photoinitiatoren. Man vermutet, dass durch die Abwesenheit von Sauerstoff und Polymerisationsintiatoren es verstärkt zu Verzweigungs- und Vernetzungsreaktionen in der wachsenden Polymerkette kommt.

Die Polymerisation der das Polymerisat bildenden Monomere kann sowohl als Substanz-, Lösungs- oder Fällungspolymerisation oder als Polymerisation im Pulverbett in Gegenwart eines Wärmeübertragungsmittels durchgeführt werden.

Zur Entfernung restlicher Sauerstoffspuren hat es sich bewährt, die Polymerisation in Gegenwart wenigstens eines Reduktionsmittels durchzuführen. Geeignet sind grundsätzlich alle Verbindungen, die Sauerstoff binden. Hierzu zählen insbesondere Salze der schwefligen- und der hyposchwefligen Säure, Dithionite wie Natriumsulfit, Natriumpyrosulfit, Natriumdithionit, weiterhin Ascorbinsäure oder Mischungen der vorgenannten Reduktionsmittel. Vorzugsweise setzt man die Reduktionsmittel in einer Menge von 0,01 bis 2 Gew.-%, insbesondere 0,05 bis 1 Gew.-%, bezogen auf die zu polymerisierenden Monomere ein. Die Entfernung von Sauerstoff aus der Reaktionsmischung gelingt auch, indem man die Polymerisation unter einem verminderten Druck durchführt, so dass das Reaktionsgemisch bei der gewählten Polymerisationstemperatur siedet. Dabei hat es sich bewährt, zusätzlich einen Stickstoffstrom durch das Polymerisationgemisch zu leiten. Selbstverständlich können auch zwei oder mehrere dieser Massnahmen gemeinsam angewendet werden.

Die Polymerisation findet in Abhängigkeit von der Reaktivität der zu polymerisierenden Monomere und der Art des Polymerisationsverfahrens bei Polymerisationstemperaturen üblicherweise im Bereich von 20°C bis 220°C, vorzugsweise im Bereich von 50°C bis 200°C, insbesondere im Bereich von 70°C bis 150°C statt. Bei der Substanzpolymerisation sind in der Regel höhere Reaktionstemperaturen, z.B. 100°C bis 220°C erforderlich als bei der Lösungs- oder Fällungspolymerisation, die auch bei Temperaturen bis 100°C mit zufriedenstellender Geschwindigkeit abläuft. Selbstverständlich können zur Lösungspolymerisation auch höhere Temperaturen, z.B. bis 150°C angewendet werden. Falls erforderlich wird die Polymerisation dann in Druckgefässen durchgeführt. Je nach Art der eingesetzten Monomere und der gewählten Temperatur beträgt die Polymerisatiorisdauer 0,2 bis 20 h, vorzugsweise 0,5 bis 15 h.

Bei den erfindungsgemäss zur Anwendung kommenden teilchenförmigen Polymerisaten handelt es sich vorzugsweise um "Popcorn-Polymerisate". Die Bezeichnung "Popcorn-Polymerisat" steht für schaumige, krustige Polymerisat-Körner mit Blumenkohl-artiger Morphologie. Popcorn-Polymerisate weisen einen hohen Vernetzungsgrad auf. Aufgrund ihrer hohen Vernetzung sind Popcorn-Polymerisate in der Regel unlöslich und kaum quellbar. Popcorn-Polymere haben ausserdem die Eigenschaft, daß sie bei Kontakt mit den Monomeren, aus denen sie bestehen oder mit anderen Monomeren, diese in Popcorn-Polymerisate verwandeln können. Sie wirken sozusagen als Keim für die Popcorn-Polymerisation.

Im Stand der Technik wurden verschiedentlich Verfahren zur Popcorn-Polymerisation beschrieben, z.B. in DE-A 2255263, US 2,341,175, US 3,277,066, Houben-Weyl, Band 14, Makrom. Stoffe, Teil 1, Seite 98 (1961), Ullmanns Encyklopädie der Techn. Chemie, 4. Aufl. Band 19, Seite 385 (1980), EP-A 88964 und EP-A 177812. Diese Verfahren können in analoger Weise für die Herstellung der erfindungsgemäss zur Anwendung kommenden Polymerisate eingesetzt werden.

Die Herstellung der Popcorn-Polymerisate, d.h. die Popcorn-Polymerisation erfolgt in der Regel wie oben beschrieben durch Polymerisation der das Polymerisat konstituierenden Monomere in Abwesenheit von Sauerstoff und Polymerisationsintiatoren und insbesondere in Gegenwart eines Reduktionsmittels für Sauerstoff. Hinsichtlich Reaktionstemperaturen, und Polymerisationsdauer gilt das zuvor gesagte. Ferner hat es sich bewährt, die Polymerisation durch Zugabe geringer Mengen Alkali, z.B. Natriumhydroxid oder Kaliumhydroxid zu beschleunigen. Häufig setzt man das Alkali in einer Menge von 0,05 bis 2 Gew.-% und vorzugsweise von 0,1 bis 1 Gew.-%, bezogen auf die zu polymerisierenden Monomere ein.

Die Popcorn-Polymerisation kann als Substanz-, Lösungs- oder Fällungspolymerisation oder als Polymerisation in einem Pulverbett durchgeführt werden.

Insbesondere hat es sich bewährt, die Polymerisation unter Bildung eines Popcorn-Polymerisats als Polymerisationkeim zu starten und dann die Polymerisation durch Zugabe weiterer Monomere fortzusetzten. Zur Herstellung des Polymerisationskeims geht man vorzugsweise so vor, dass man zunächst eine Mischung aus 99,5 bis 95 Gew.-% wenigstens eines monoethylenisch ungesättigten Monomers, vorzugsweise eines N-Vinyllactam d), insbesondere N-Vinylpyrrolidon und 0,5 bis 5 Gew.-% wenigstens eines Monomers c) den Bedingungen der Popcorn-Polymerisation unterwirft. Die Menge der den Keim bildenden Monomere beträgt vorzugsweise 0,1 bis 10 Gew.-% und insbesondere 0,2 bis 5 Gew.-% der Gesamtmonomermenge.

Bevorzugt ist z.B. eine Arbeitsweise, bei der man die Popcorn-Polymerisation dadurch startet, daß man obige Mischung der die Keime bildenden Monomere, vorzugsweise N-Vinyllactam und Monomer c) in einem geeigneten Lösungsmittel auf eine Temperatur von 50°C bis 150°C in Abwesenheit von Sauerstoff und Polymerisationsinitiatoren erhitzt. Diese Polymerisation wird insbesondere durch Anwesenheit geringer Mengen an Natronlauge oder Kalilauge beschleunigt. Innerhalb einer kurzen Zeit bildet sich ein polymerisationsfähiges Popcorn-Polymerisat, das bei Zugabe der restlichen Monomermischung, d.h. im besonderen der Monomere a), b) und c), die Popcorn-Polymerisation dieser Monomeren ohne Induktionsperiode startet. Zudem ist es möglich, das polymerisationsfähige Popcorn-Polymerisat in eine Vorlage zu überführen, die Monomer und Vernetzer enthält, bzw. in die dann Monomer und Vernetzer zudosiert werden.

Die Popcorn-Polymerisation kann auch ohne Lösungsmittel als Substanzpolymerisation durchgeführt werden. Dabei werden die zu polymerisierenden Monomere durch Einleiten von Stickstoff inertisiert und anschließend auf eine Temperatur im Bereich von 20 bis 200°C, bevorzugt 100 bis 200°C, besonders bevorzugt 150 bis 180°C erhitzt. Es ist vorteilhaft, auch während der Polymerisation weiter einen schwachen Stickstoffstrom durch die Polymerisationsmischung zu leiten. Der Ausschluß von Sauerstoff wird auch dadurch erreicht, daß man die Monomere vermindertem Druck polymerisiert, so dass die Monomere sieden. Hierbei fällt das Polymerisat als Pulver an. Das Popcorn-Polymerisat wird daraus in Ausbeuten von über 90 % in Form eines Pulvers mit einer durchschnittlichen Teilchengröße von etwa 10 µm bis 5 mm, vorzugsweise 10 µm bis 500 µm erhalten.

Zur Herstellung der Popcorn-Polymerisate wird die Fällungspolymerisation in Wasser oder wässrigen Lösungsmitteln bevorzugt. Die wässrigen Lösungsmittel können gegebenenfalls noch weitere, mit Wasser mischbare Lösungsmittel enthalten, wobei der Anteil dieser Lösungsmittel in der Regel weniger als 50 Vol-%, insbesondere weniger als 20 Vol-% beträgt. Vorzugsweise ist Wasser alleiniges Lösungsmittel. Beispiele für mit Wasser mischbare Lösungsmittel sind C₁-C₄-Alkohole wie Methanol, Ethanol, n-Propanol, Isopropanol und tert.-Butanol, Ketone wie Aceton oder Methylethylketon, Dimethylsulfoxid.

Die Fällungspolymerisation kann sowohl unter Anwendung der oben beschriebenen Keimtechnik als auch ohne gezielte Keimbildung (Induktionsperiode) durchgeführt werden.

Die Polymerisationstemperatur kann in einem weiten Bereich variiert werden, z.B. von etwa 50 bis 200, vorzugsweise 70 bis 150°C. Der Einsatz von Reduktionsmitteln zur Entfernung von Sauerstoff ist auch hier bevorzugt. Alternativ oder zusätzlich leitet man häufig einen Inertgasstrom durch das wässrige Polymerisationsmedium.

Die Konzentration der Monomeren wird dabei zweckmäßigerweise so gewählt, daß das Reaktionsgemisch über die gesamte Reaktionsdauer hinweg gut gerührt werden kann. Um die Reaktion in den üblichen Rührkesseln durchzuführen, wählt man Monomerkonzentrationen, bezogen auf die wäßrige Mischung, vorzugsweise unterhalb 50 Gew.-%, insbesondere unterhalb 40 Gew.-%, besonders bevorzugt von etwa 5 bis 30 Gew.-% und speziell 10 bis 20 Gew.-%. Falls kräftigere Rührwerke zur Verfügung stehen, kann die Monomerkonzentration der wäßrigen Lösung auch auch mehr als 50 Gew.-% betragen.

In einigen Fällen kann es zweckmäßig sein, die Popcorn-Polymerisation mit einer relativ konzentrierten Lösung zu beginnen und dann im Verlauf der Reaktion Wasser zur Verdünnung zuzusetzen. Die Popcorn-Polymerisation wird bevorzugt bei pH-Werten oberhalb von pH 8 gestartet. Die Einstellung des pH-Wertes kann durch Zugabe geringer Mengen an Basen wie Natriumhydroxid oder Ammoniak oder der üblichen Puffersalze wie Soda, Natriumhydrogencarbonat oder Natriumphosphat erfolgen.

Bei einer besonders bevorzugten Ausführungsform der Fällungspolymerisation wird ein wasserlösliches Comonomer, vorzugsweise ein N-Vinyllactam, ein Teil des Vernetzers c), Wasser und gegebenenfalls ein Puffer sowie ein Reduktionsmittel in einem schwachen Stickstoffstrom erhitzt, bis sich die ersten Polymerisatteilchen bilden. Hinsichtlich des Mengenverhältnisses von Comonomer zu Vernetzer gilt das obengesagte. Die Menge der die Keime bildenden Monomere beträgt vorzugsweise 0,1 bis 10 Gew.-% und insbesondere 0,2 bis 5 Gew.-% der Gesamtmonomermenge. Dann wird eine vorher durch Einblasen von Stickstoff inertisierte Mischung aus im besonderen Monomeren a), gegebenfalls b), c) und d) und gegebenenfalls Wasser als Verdünnungsmittel innerhalb von 0,2 bis 10 Stunden zugegeben. Die Monomere a), b) und c) können auch in einem mit Wasser mischbaren Lösungsmittel gelöst sein. Diese Arbeitsweise hat den Vorteil, daß die Popcorn-Polymerisation eine nur verhältnismäßig kurze Zeit in Anspruch nimmt.

Gegebenenfalls führt man im Anschluss an die Polymerisation noch ein Reinigungsverfahren zur Entfernung flüchtiger Komponenten, z.B. eine Wasserdampfdestillation der wässrigen Suspension durch.

Die Popcorn-Polymerisate fallen bei der Fällungspolymerisation im Wässrigen als wässrige Suspension mit einer Ausbeute von in der Regel wenigstens 70 bis > 99 %, bezogen auf die eingesetzten Monomere an. Die Polymerisate können aus der wäßrigen Suspension durch Filtrieren oder Zentrifugieren mit vorzugsweise anschließendem Auswaschen mit Wasser und Trocknen in üblichen Trocknern wie Umluft- oder Vakuumtrockenschrank, Schaufeltrockner oder Stromtrockner isoliert werden.

Die so erhältlichen Popcorn-Polymerisate sind in Wasser und allen Lösemitteln praktisch nicht löslich und quellen darin auch nur geringfügig.

Die erfindungsgemäss zur Anwendung kommenden, unlöslichen, nur wenig quellbaren Polymerisate können ausser als Filtrationshilfsmittel auch als Adsorbentien, Ionenaustauscher, Trägermaterialien verwendet werden. Insbesondere sind sie als Filterhilfsmittel geeignet, denn sie zeichnen sich gegenüber anderen Filterhilfsmitteln auf Basis von Polymerisaten durch ein verbessertes Sedimentationsverhalten bei zumindest gleicher oder verbesserter Filtrationswirkung aus. Ausserdem sind sie chemisch inert und beeinflussen die zu filtrierenden Flüssigkeiten nicht nachteilig.

Es versteht sich von selbst, dass die erfindungsgemäß zur Anwendung kommenden feinteiligen Polymerisate, im Folgenden auch als Polymerpulver bezeichnet, zusammen mit anderen feinteiligen Filterhilfsmitteln des Standes der Technik zur Filtration wässriger Flüssigkeiten eingesetzt werden können. Erfindungsgemäß geeignet sind daher Filterhilfsmittel, welche die vorstehend beschriebenen feinteiligen Polymerisate enthalten. Der Anteil an erfindungsgemäßen Polymerisaten in den Filterhilfsmitteln beträgt in der Regel wenigstens 20 Gew.-%, vorzugsweise wenigstens 50 Gew.-% und insbesondere wenigstens 80 Gew.-%, bezogen auf das Gesamtgewicht des Filterhilfsmittels. Eine spezielle Ausführungsform betrifft Filterhilfsmittel, welche die vorstehend beschriebenen, feinteiligen wasserunlöslichen und wenig quellbaren Polymerisate alleine oder nahezu ausschließlich (> 95 Gew.-%) enthalten.

Die vorliegende Erfindung betrifft somit auch ein Verfahren zur Filtration wässriger Flüssigkeiten in Gegenwart der oben beschriebenen teilchenförmigen, wasserunlöslichen und wenig quellbaren Polymerisate, insbesondere ein Verfahren, das nach der Methode der Anschwemmfiltration durchgeführt wird.

Die Filtrationsverfahren können in Analogie zu den eingangs beschriebenen Filtrationsverfahren des Standes der Technik unter Anwendung der oben beschriebenen Polymerpulver als Filterhilfsmittel durchgeführt werden, mit anderen Worten, die Filtration der zu filtrierenden Flüsigkeit wird in an sich bekannter Weise in Gegenwart der oben beschriebenen Filterhilfsmittel durchgeführt. Die bevorzugte Anschwemmfiltration ist dem Fachmann aus der eingangs zitierten Literatur ebenfalls bekannt. Sie wird häufig zur Klärung von Getränken wie Fruchtsäften, Bier oder Wein eingesetzt.

Im Falle der sogenannten Anschwemmfiltration wird man in der Regel vor Filtrationsbeginn auf einer Stützfläche, beispielsweise einer Siebplatte, einem Lochblech, einem feinen Netz, einem mit Schlitzen versehenen Netz, einem Filtergewebe oder dergleichen, eine Vorschicht aus den erfindungsgemäß zur Anwendung kommenden Filterhilfsmitteln aufbringen. Die Menge an Filterhilfsmitteln, die zur Erzeugung einer derartigen Voprschicht erforderlich ist, liegt in der Regel im Bereich von 10 g/m² bis 10 kg/m² und häufig im Bereich von 50 g/m² bis 2 kg/m², speziell im Bereich von 100 g/m² bis 1 kg/m². Die Dicke der Vorschicht liegt dementsprechend vorzugsweise im Bereich von 0,5 mm bis 10 cm, insbesondere im Bereich von 1 bis 10 mm. Die zu filtrierende Flüssigkeit wird dann durch Anlegen einer Druckdifferenz, z. B. durch Anlegen eines Vakuums auf der Filtratseite und/oder durch Überdruck auf Seiten der Trübe, durch die Filterschicht (= Vorschicht + Stützfläche) geführt, wobei man vorzugsweise während des Filtrationsvorganges weiteres erfindungsgemäß zur Anwendung kommendes Filterhilfsmittel, enthaltend wenigstens ein teilchenförmiges Polymer, der zu filtierenden Flüssigkeit zudosiert.

Zur Anschwemmfiltration sind grundsätzlich alle dem Fachmann bekannten Filterapparate geeignet, bei denen sich in der oben beschriebenen Weise eine Vorschicht auf eine Stützfläche ausbilden lässt. Geeignet sind insbesondere auch Vakuumtrommelfilter. Hierbei bringt man in der Regel zunächst eine dickere Vorschicht, die bis 10 cm betragen kann, aus dem erfindungsgemäßen Filterhilfsmittel auf die Filterfläche auf und verringert dann während des Filtrationsvorgangs die Dicke der Schicht, beispielsweise mit Schabern, auf eine Dicke von wenigen Millimetern. Auch hier wird man häufig während des Filtrationsvorgangs weiteres Filterhilfsmittel zusammen mit der zu filtrierenden Flüssigkeit zuführen.

Auf Grund ihrer chemischen Inertheit sind die erfindungsgemäß zur Anwendung kommenden Polymerpulver insbesondere zum Einsatz in der Lebensmittelindustrie, beispielsweise zur Filtration von Fruchtsaft- und Gärungsgetränken, geeignet. Auf Grund ihrer guten Filtrationswirkung sind die erfindungsgemäß zur Anwendung kommenden Polymerpulver besonders für die Filtration von Bier geeignet.

Die folgenden Beispiele sollen die Erfindung näher erläutern, ohne sie jedoch darauf einzuschränken.

### I. Herstellung der teilchenförmigen Polymerisate (Beispiele 1 bis 8):

### Beispiel 1 (Polymerisat P1)

In einer Rührapparatur wurden 100 g destilliertes Wasser, 3 g N-Vinylpyrrolidon, 0,06 g N,N'-Divinylethylenharnstoff und 5 g Natriumhydroxid unter Einleiten eines schwachen Stickstoffstromes auf 60°C erhitzt. Anschließend wurden 0,2 g Natriumdithionit zugesetzt. Die Mischung wurde auf 75°C erwärmt und auf dieser Temperatur gehalten. Nach 30 Minuten bildeten sich weiße Flocken. Nun gab man innerhalb von 4 Stunden unter Beibehaltung der Temperatur eine Lösung von 3 g Divinylbenzol in 294 g Acrylsäure gleichmäßig zu. Die weißen Flocken gingen in eine Polymerisatsuspension über, die langsam hochviskos wurde. Zeitgleich beginnend gab man inerhalb 4 h 2000 ml entionisiertes Wasser zu. Anschließend wurde noch 1 Std. bei 80°C nacherhitzt und dann gekühlt. Die Reaktionsmischung wurde zur Entfernung flüchtiger Bestandteile zunächst mit Wasserdampf behandelt. Die erhaltene viskose Suspension wurde abfiltriert und mit Wasser gewaschen, um Verunreinigungen wie lösliches Polymer und Monomere zu entfernen. Der feuchte Feststoff wurde anschließend im Vakuum getrocknet.

### Beispiele 2 bis 7 (Polymerisate P2 bis P7)

Die Herstellung erfolgte analog Beispiel 1. Die Zusammensetzung des Monomerzulaufs ist in Tabelle 1 angegeben. In den Beispielen 2, 4, 5, 6 und 7 wurden abweichend von Beispiel 1 0,25 g Natriumhydroxid eingesetzt.

**Tabelle 1**

| Beispiel | Acrylsäure [g] | Styrol [g] | Divinylbenzol [g] | Ausbeute [%] |
|---|---|---|---|---|
| 1 | 294 | 0 | 3 | 93 |
| 2 | 219 | 75 | 3 | 72 |
| 3 | 90 | 204 | 3 | 86 |
| 4 | 147 | 147 | 3 | 80 |
| 5 | 152 | 102 | 3 | 77 |
| 6 | 190 | 64 | 3 | 70 |
| 7 | 60 | 237 | 3 | 77 |

### Beispiel 8 (Polymerisat P8)

In einer Rührapparatur wurden 60 g destilliertes Wasser, 180 g Acrylsäure, 7,2 g Butandioldiacrylat unter Einleiten eines schwachen Stickstoffstroms auf 60°C erwärmt. Anschliessend gab man 0,2 g Natriumdithionit zu. Man erwärmte auf 75°C und behielt die Temperatur bei. Nach etwa 30 min. begann die Bildung weisser Flokken. Mit fortschreitender Dauer bildete sich unter Viskositätszunahme eine Polymersuspension. Nach 4 h erwärmte man auf 80°C, behielt diese Temperatur eine Stunde bei, kühlte auf Raumtemperatur, filtrierte und wusch den Feststoff mit Wasser, um Verunreinigungen wie lösliches Polymer und Monomere zu entfernen. Der feuchte Feststoff wurde anschließend im Vakuum getrocknet. Die Ausbeute betrug 92 %

### II. Anwendungstechnische Prüfung der Polymerisate P1 bis P8

### II.1 Sedimentation in Wasser

Die Bestimmung der Sedimentation erfolgte visuell. Hierzu wurde ein Aliquot des Filterhilfsmittels in einem Standzylinder in Wasser durch Schütteln suspendiert. Wenn mehr als 90 % der Teilchen sedimentieren, wird der Versuch positiv bewertet.

**Tabelle 2:**

| Sedimentation in Wasser | |
|---|---|
| Filterhilfsmittel | Sedimentation in Wasser |
| Polystyrol¹ (V) | nein |
| Polyamid² (V) | nein |
| Kieselgur (V) | ja |
| P1 | ja |
| P2 | ja |
| P3 | ja |
| P4 | ja |
| P5 | ja |
| P6 | ja |
| P7 | ja |
| P8 | ja |
| V = Vergleich | |

| | |
|---|---|
| ¹⁾ Polystyrol 158 K, kaltgemahlen und gesiebt | |
| ²⁾ Polyamid 12, Vestosint Typ 1611 der Fa. Degussa-Hüls | |

Tabelle 2 belegt die gute Sedimentation der erfindungsgemäßen Filterhilfsmittel und damit ihre Eignung für die Ausschwemmfiltration wässriger Flüssigkeiten.

### II.2 Filtration einer Standard-Trübungslösung

Die Filtrationswirkung wird anhand der Klärung einer Standard-Trübungslösung, d. h. einer Formazin-Suspension mit definierter Trübung, bestimmt. Diese Lösungen sind dem Fachmann zur Charakterisierung von Filterhilfsmitteln für die Getränkeindustrie bekannt. Die Untersuchung wird als Anschwemmfiltration durchgeführt. Hierzu wurde die Formazin-Suspension mit dem erfindungsgemäßen Filterhilfsmittel gemäß EBC-Test bei einem Anschwemmdruck von 4,5 bar filtriert. Nach 5 1 Durchfluss wurde die Trübung nach EBC bestimmt. Das Filtrat gilt als klar, wenn der EBC-Wert weniger als 1 beträgt. Ausserdem wurde die Durchflussrate und der Druckabfall am Filterkörper (Druckdifferenz vor/nach Filterkörper) gemessen. Die erfindungsgemässen Polymerisate zeichnen sich durch einen geringen Druckabfall und hohe Filtrationsraten aus.

Während der gesamten Untersuchung blieben sowohl Anschwemmdruck als auch Filtrationsrate konstant, was die vorteilhaften Eigenschaften der erfindungsgemäßen Filterhilfsmittel belegt (hohe Standzeit).

Die folgenden Untersuchungen wurden mit den Polymerpulvern FH4 bis FH6 aus II durchgeführt.

**Tabelle 3:**

| Filtrationsversuche | | | |
|---|---|---|---|
| Polymerisat | Durchflussrate [l/h] | Druckabfall Δp [bar] | EBC-Trübung (nach 51) |
| P1* | 2 | 0,2 | 0,34 |
| P3 | 34 | 0 | 0,43 |
| P4 | 20 | 0 | 0,50 |
| P7 | 34 | 0 | 0,45 |

| | | | |
|---|---|---|---|
| * Versuche wurden in einen anderen Apparatur durchgeführt. Insofern ist der Wert der Durchflussrate nicht vergleichbar. | | | |

## Patentansprüche

1. Verwendung teilchenförmiger, in Wasser unlöslicher und wenig quellbarer Polymerisate aus ethylenisch ungesättigten Monomeren, die wenigstens 20 Gew.-%, bezogen auf das Gesamtgewicht der Monomere, wenigstens einer α,β-monoethylenisch ungesättigten Monocarbonsäure mit 3 bis 6 C-Atomen einpolymerisiert umfassen, als Filterhilfsmittel für die Filtration wässriger Flüssigkeiten.

2. Verwendung nach Anspruch 1, wobei die ethylenisch ungesättigte Carbonsäure ausgewählt ist unter Acrylsäure, Methacrylsäure und deren Mischungen.

3. Verwendung nach Anspruch 1 oder 2, wobei das Polymerisat 0,1 bis 10 Gew.-% mindestens einer Verbindung mit wenigstens 2 nichtkonjugierten, ethylenisch ungesättigten Doppelbindungen einpolymerisiert enthält.

4. Verwendung nach einem der vorhergehenden Ansprüche, wobei das Polymerisat
a) 20 bis 98,9 Gew.-% mindestens einer α,β-monoethylenisch ungesättigten Monocarbonsäure mit 3 bis 6 C-Atomen als Monomer a),
b) 1 bis 79,9 Gew.-% Styrol und/oder mindestens eines einfach ungesättigten Styrolderivates als Monomer b),
c) 0,1 bis 10 Gew.-% mindestens eines Monomers c) mit wenigstens 2 nichtkonjugierten, ethylenisch ungesättigten Doppelbindungen und gegebenenfalls
d) 0 bis 40 Gew.-% eines oder mehrerer von den Monomeren a) bis c) verschiedenen Monomers d),
einpolymerisiert enthält und wobei sich die Gew.-% Angaben der Einzelkomponenten a) bis d) zu 100 % addieren.

5. Verwendung nach Anspruch 1, wobei das Polymerisat
a) 20 bis 89,8 Gew.-% Acrylsäure,
b) 10 bis 74,8 Gew.-% Styrol oder einer Mischung von Styrol und mindestens einem einfach ungesättigten Styrolderivat,
c) 0,2 bis 8 Gew.-% mindestens eines Monomers c), ausgewählt unter Alkylenglykoldi(meth)acrylaten, N,N'-Divinylharnstoffen und N,N'-Divinylaromaten, und gegebenenfalls
d) 0 bis 10 Gew.-% eines oder mehrerer N-Vinyllactame,
einpolymerisiert enthält und wobei sich die Gew.-% Angaben der Einzelkomponenten a) bis d) zu 100 % addieren.

6. Verwendung nach einem der vorhergehenden Ansprüche, wobei das Polymerisat ein Popcorn-Polymerisat ist.

7. Verfahren zur Filtration einer wässrigen Flüssigkeit unter Verwendung von Filterhilfsmitteln, **dadurch gekennzeichnet, dass** man als Filterhilfsmittel ein Polymerisat gemäss einem der Ansprüche 1 bis 6 verwendet.

8. Verfahren nach Anspruch 7, **dadurch gekennzeichnet, dass** die Filtration als Anschwemmfiltration durchgeführt wird.

9. Verwendung nach Anspruch 7 oder 8, **dadurch gekennzeichnet, dass** es sich bei der zu filtrierenden Flüssigkeit um ein Fruchtsaft- oder Gärungsgetränk handelt.

10. Wasserunlösliche, nur wenig quellbare Polymerisate, enthaltend einpolymerisiert:
a) 20 bis 98,9 Gew.-% mindestens einer α,β-monoethylenisch ungesättigten Monocarbonsäure mit 3 bis 6 C-Atomen als Monomer a),
b) 1 bis 79,9 Gew.-% Styrol und/oder mindestens eines einfach ungesättigten Styrolderivates als Monomer b),
c) 0,1 bis 10 Gew.-% mindestens eines Monomers c) mit wenigstens 2 nichtkonjugierten, ethylenisch ungesättigten Doppelbindungen und gegebenenfalls
d) 0 bis 40 Gew.-% eines oder mehrerer von den Monomeren a) bis c) verschiedenen Monomers d),
wobei sich die Gew.-% Angaben der Einzelkomponenten a) bis d) zu 100 % addieren.

11. Verfahren zur Herstellung von Polymerisaten gemäss Anspruch 10, **dadurch gekennzeichnet, dass** man die Monomere a), b), c) und gegebenenfalls d) in Abwesenheit von Sauerstoff und Polymerisationsinitiatoren polymerisiert.

12. Verfahren nach Anspruch 10 oder 11, **dadurch gekennzeichnet, dass** man die Polymerisation bei einer Temperatur von 50°C bis 200°C durchführt.

13. Verfahren nach einem der Ansprüche 10 bis 12, **dadurch gekennzeichnet, dass** man die Polymerisation in Gegenwart eines Reduktionsmittels durchführt.

14. Verfahren nach einem der Ansprüche 10 bis 13, **dadurch gekennzeichnet, dass** man die Polymerisation als Fällungspolymerisation in einem wässrigen Reaktionsmedium durchführt.
